# EUROPÄISCHE PATENTSCHRIFT

(11) **EP 1 616 730 B1**
(45) Veröffentlichungstag und Bekanntmachung des Hinweises auf die Patenterteilung: **11.04.2007**
(21) Anmeldenummer: 04103334.1
(22) Anmeldetag: 13.07.2004
(51) Int. Cl.: B60G 7/00, B60G 3/04, B60G 15/07

(54) **Aufhängungsvorrichtung für ein Fahrzeug**
Suspension device for a vehicle
Dispositif de suspension pour un véhicule

(43) Veröffentlichungstag der Anmeldung: 18.01.2006
(73) Patentinhaber: Ford Global Technologies, LLC, A subsidary of Ford Motor Company, Dearborn, MI 48126 (US)
(72) Erfinder: Frantzen, Michael Johannes, 52076 Aachen (DE); Ohra-aho, Lauri Mikael, 52074 Aachen (DE); Simon, Marc, 50735 Köln (DE)
(74) Vertreter: Drömer, Hans-Carsten

(56) Entgegenhaltungen:
- EP-A- 0 462 399
- WO-A-01/72572
- DE-B- 1 077 538
- FR-A- 2 679 493
- FR-A- 2 710 008
- FR-A- 2 813 240
- PATENT ABSTRACTS OF JAPAN Bd. 013, Nr. 484 (M-886), 2. November 1989 (1989-11-02) -& JP 01 190511 A (MAZDA MOTOR CORP), 31. Juli 1989 (1989-07-31)
- PATENT ABSTRACTS OF JAPAN Bd. 013, Nr. 542 (M-901), 5. Dezember 1989 (1989-12-05) -& JP 01 223010 A (MAZDA MOTOR CORP), 6. September 1989 (1989-09-06)
- PATENT ABSTRACTS OF JAPAN Bd. 2002, Nr. 05, 3. Mai 2002 (2002-05-03) -& JP 2002 012015 A (NISSAN MOTOR CO LTD), 15. Januar 2002 (2002-01-15)
- PATENT ABSTRACTS OF JAPAN Bd. 2000, Nr. 20, 10. Juli 2001 (2001-07-10) -& JP 2001 063330 A (MAZDA MOTOR CORP), 13. März 2001 (2001-03-13)
- PATENT ABSTRACTS OF JAPAN Bd. 013, Nr. 542 (M-901), 5. Dezember 1989 (1989-12-05) -& JP 01 223009 A (MAZDA MOTOR CORP), 6. September 1989 (1989-09-06)

## Beschreibung

Die Erfindung bezieht sich auf eine Aufhängungsvorrichtung für ein Fahrzeug, insbesondere für ein Kraftfahrzeug, nach dem Oberbegriff von Anspruch 1.

Aus dem Stand der Technik sind verschiedene Aufhängungsvorrichtungen für ein Fahrzeug, insbesondere für ein Kraftfahrzeug, bekannt. Es sei dazu zunächst auf das in der JP 2001063330 A beschriebene Fahrzeug- Aufhängungssystem verwiesen. Es soll dieses Fahrzeug- Aufhängungssystem dazu dienen, eine kompakte und leichtgewichtige Ausgestaltung aufzuweisen, im Weiteren sollen die Störkrafthebelarme reduziert werden, wobei eine möglichst ideale imaginäre Achsschenkel- Achse gebildet werden soll. Dazu ist vorgesehen, daß das untere Ende eines zur drehbaren Lagerung eines Rades vorgesehenen Schenkelelementes über einen unteren Arm mit der Fahrzeugkarosserie verbunden ist. Das obere Ende des Schenkelelementes ist dabei derart mit einem oberen Verbindungselement verbunden, daß es nur um eine vertikale Achse drehbar gelagert ist. Das obere Verbindungselement ist dabei mit dem unteren Ende eines Federbeines verbunden, derart, daß dieses nur um eine longitudinal verlaufende Achse drehbar gelagert ist. Ein oberer Arm ist an einem Ende mit der Fahrzeugkarosserie an einem Punkt über ein Gummilager verbunden, und wird an dem anderen Ende von der longitudinal verlaufenden Achse oder dem oberen Verbindungselement getragen, um lediglich um die longitudinal verlaufende Achse drehbar zu sein. Das untere Ende des Federbeines weist ein Paar von front- und rückseitigen Armbereichen auf, welche mit der longitudinal verlaufenden Achse gekuppelt sind, wobei das obere Verbindungselement in longitudinaler Richtung zwischen diesen Armen positioniert ist. Es sind dabei in Draufsicht gesehen das obere Verbindungselement, ein Abstützbereich für das Federbein, das Federbein und das Gummilager praktisch in Fahrzeugerstreckungsrichtung miteinander ausgerichtet.

Die DE 1 077 538, die als nächstliegender Stand der Technik betrachtet wird, offenbart eine Aufhängungsvorrichtung mit einem Federelement und einem mit der Fahrzeugkarosserie verbundenen Schenkelelement bzw. Lenktrapez für gelenkte Räder von Fahrzeugen. Die Schwenkachse der Räder schneidet die Fahrbahn außerhalb der Standfläche des Fahrzeugs. Die Schwenkachse wandert bei einer Ausgestaltung beim Radeinschlag parallel zu und außerhalb der Radmittelebene.

Die JP 01190511 betrifft eine Fahrzeugaufhängung. Eine Gelenkverbindung ist in einen oberen und unteren Teil aufgeteilt. Eine Spindel erstreckt sich vom unteren Ende des unteren Gelenkteils und ist mit einem lenkbaren Rad verbunden. Ein Gelenkarm erstreckt sich vom unteren Ende des oberen Gelenkteils und ist damit mit einer Kupplung verbunden, wobei ein Kugelgelenk zwischen dem oberen Gelenkteil und dem Gelenkarm angeordnet ist. Der obere Gelenkarm ist hierbei in Längsrichtung weich, in Querrichtung dagegen hart ausgeführt.

Die JP 2002012015 offenbart eine Aufhängungsvorrichtung mit einem Kupplungsarm, einem Torsionsträger und einer Achse. Der Kupplungsarm und die Achse sind über ein Bindeglied und über ein ebenes Bindeglied verbunden um eine Bewegung der Achse relativ zur Fahrzeuglängsrichtung bezogen auf den Kupplungsarm zu ermöglichen.

Es mag eine derartige Anordnung eine kompakte und leichtgewichtige Ausgestaltung aufweisen, nachteilig ist bei derartigen Aufhängungsvorrichtungen für ein Fahrzeug, insbesondere für ein Kraftfahrzeug, daß diese Aufhängungsvorrichtungen für Vorder- oder Hinterachsaufhängungen unter Antriebs- und unter Bremsbedingungen unter dem Auftreten von Störkräften leiden. Es werden dadurch Lenkstörungen oder - beeinträchtigungen verursacht. Um diesen Nachteil zu beheben, ist es aus der Praxis bekannt, zur Vermeidung oder zur Reduzierung von Störkräften oder von deren Hebelarmen ein sehr aufwendiges System unter Verwendung von vier seitlichen Armen zu gebrauchen, wobei diese bekannten Systeme mit vier seitlichen Armen eine so genannte virtuelle Achsschenkel- Achse aufweisen. Weiterhin ist ein System bekannt mit einer davon abweichenden Ausführung mit einem nach vom und hinten gerichteten zweiarmigen unteren Steuerarm. Auch dieses System mit seitlichen Steuerarmen weist eine virtuelle Achsschenkel- Achse auf. Ausgehend von diesen bekannten Systemen ist insbesondere eine Vereinfachung des Aufbaus sowie möglichst eine Vermeidung von Störeinflüssen wünschenswert sowie, die Austauschbarkeit mit konventionellen Fahrwerken.

Ausgehend von diesen bekannten Aufhängungsvorrichtungen für ein Fahrzeug, insbesondere für ein Kraftfahrzeug liegt der Erfindung die Aufgabe zugrunde, die bekannten Anordnungen unter Beibehaltung der bisherigen Vorteile in der Weise zu verbessern bzw. weiterzuentwickeln, daß die Nachteile der zuvor diskutierten Lösungen vermieden werden, wobei insbesondere eine Vereinfachung des Aufbaus sowie möglichst eine Vermeidung von Störeinflüssen erzielt werden soll. Die gewünschte Anordnung soll dabei also auch einfach und kostengünstig herstellbar sein und hinsichtlich der Lebensdauer und der Zuverlässigkeit den bestehenden Anforderungen entsprechen.

Diese Aufgabe wird erfindungsgemäß durch eine Aufhängungsvorrichtung mit den Merkmalen des Anspruchs 1 gelöst. Auf diese Weise wird erstmalig mit einfachen Mitteln die Möglichkeit geschaffen, die Nachteile der zuvor bekannten Lösungen zu vermeiden, wobei insbesondere der Einfluss von Störeinflüssen minimiert wird. Dies erfolgt durch eine Reduzierung der Hebelarme der Störkräfte dadurch, daß die virtuelle Achsschenkel- Achse sehr nahe bei der zentralen Radlagerung angeordnet ist. Mit einer derartigen Anordnung werden die Hebelarme der durch Antriebs- oder Bremskräfte verursachten Störkräfte auf nahezu null reduziert. Dies ist insbesondere möglich für Federbeinaufhängungsvorrichtungen. Die erfindungsgemäße Anordnung weist außerdem durch die Ausbildung mit nur zwei im wesentlichen seitlichen Steuerarmen einen gegenüber z. B. den vierteiligen Lösungen stark vereinfachten Aufbau auf. Die erfindungsgemäße Anordnung ist deshalb auch einfach und kostengünstig herstellbar, und weist eine hohe Zuverlässigkeit und Lebensdauer auf.

Bei der bevorzugten Ausführungsform der vorliegenden Erfindung sind die Mittelachsenverlängerungen der beiden im wesentlichen seitlichen Arme der Aufhängungsvorrichtung in einer sehr nahe bei der zentralen Radlagerung angeordneten, die virtuelle Achsschenkel- Achse bildenden Achse zusammenlaufend ausgebildet. Dies ist ein in konstruktiver Hinsicht besonders vorteilhafter Aufbau, insbesondere auch im Hinblick auf den Bauraum der Radbremse.

Es empfiehlt sich nach einem weiteren Ausgestaltungsmerkmal der vorliegenden Erfindung, daß die beiden im wesentlichen seitlichen Arme der Aufhängungsvorrichtung an dem unteren, außerhalb der die Federwirkung erzielenden Mittel wie z.B. einer Spiralfeder befindlichen Bereich des Federelementes befestigt sind. Dort lassen sich die beiden im wesentlichen seitlichen Arme der Aufhängungsvorrichtung am einfachsten befestigen.

Nach einem weiteren Ausgestaltungsmerkmal der vorliegenden Erfindung ist zur Erzielung eines konstruktiv einfachen und funktionsgerechten Aufbaus vorgesehen, daß die beiden im wesentlichen seitlichen Arme der Aufhängungsvorrichtung eine im wesentlichen H- oder X-förmige Ausgestaltung aufweisen und nach Möglichkeit gleich ausgebildet sind.

Zweckmäßig ist es nach einem weiteren Ausgestaltungsmerkmal der vorliegenden Erfindung, daß das Schenkelelement mit der Aufnahme zur rotierbaren Lagerung eines Rades einen länglich ausgebildeten Endbereich mit einem Anschlußelement für eine Verbindung zur Lenkung des Fahrzeuges umfaßt. Dabei empfiehlt es sich, daß das Schenkelelement mit der Aufnahme zur rotierbaren Lagerung des Rades um die virtuelle Achsschenkel- Achse drehbar gelagert ist, wobei eine Betätigung über das Anschlußelement an dem länglich ausgebildeten Endbereich des Schenkelelementes für die Verbindung zur Lenkung des Fahrzeuges erfolgt.

Es empfiehlt sich nach einem weiteren Ausgestaltungsmerkmal der vorliegenden Erfindung, daß die Aufhängungsvorrichtung für das Fahrzeug, insbesondere Kraftfahrzeug, als Federbeinaufhängungsvorrichtung ausgebildet ist. Für diese Art von Aufhängungsvorrichtung ist die erfindungsgemäße Anordnung besonders vorteilhaft einsetzbar, das sie flexibel, z. B. je nach Motorisierung, mit konventionellen Fahrwerken austauschbar ist. So kann z. B. für die leistungsschwächeren Modelle eines PKW eine konventionelle Radaufhängung zum Einsatz kommen, während die Topmodelle mit hoher Leistung die erfindungsgemäße Radaufhängung erhalten, wobei die Montagepunkte für beide Arten der Radaufhängung die selben bleiben.

Nach einem letzten Merkmal der vorliegenden Erfindung ist vorgesehen, daß die Aufhängungsvorrichtung für das Fahrzeug, insbesondere Kraftfahrzeug, als Aufhängungsvorrichtung für einen Vorderradantrieb aber auch für einen Hinterradantrieb ausgebildet ist.

Die Erfindung ist in den Figuren der Zeichnung in einem Ausführungsbeispiel dargestellt. Es zeigen:
- Fig. 1: eine schematische, perspektivische Darstellungdes erfindungsrelevanten Teiles der erfindungsgemäßen Aufhängungsvorrichtung für ein Fahrzeug,
- Fig. 2: eine schematische Seitenansicht eines Teiles der erfindungsgemäßen Aufhängungsvorrichtung mit dargestelltem Federbein,
- Fig. 3: die schematische Ansicht gemäß Fig. 2 in Oberansicht,
- Fig. 4: die schematische Darstellung eines seitlichen (Steuer-) Armes der erfindungsgemäßen Aufhängungsvorrichtung.

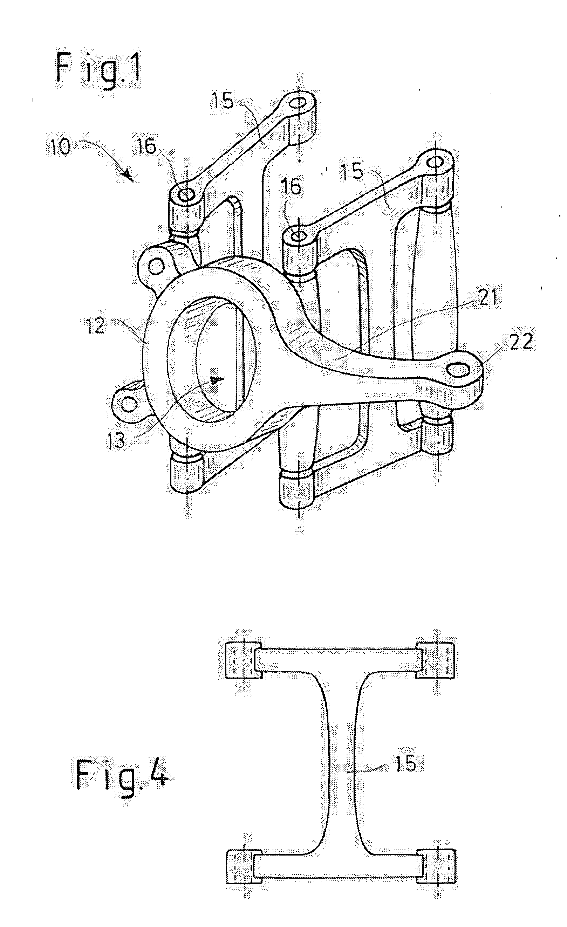

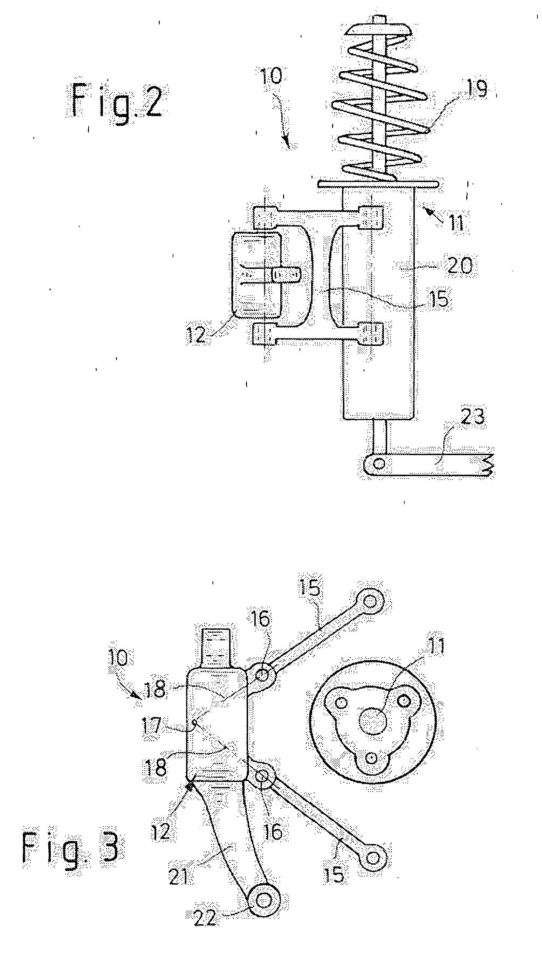

Die erfindungsgemäße Aufhängungsvorrichtung für ein Fahrzeug, insbesondere für ein Kraftfahrzeug, ist generell mit 10 bezeichnet. Es ist dazu die erfindungsgemäße Aufhängungsvorrichtung 10 in den Fig. 1, 3 und 4 der Zeichnung schematisch in seinen wesentlichen Teilen in verschiedenen Ansichten dargestellt. Die erfindungsgemäße Aufhängungsvorrichtung 10 umfaßt wenigstens ein mit 11 bezeichnetes Federelement, wie z. B. ein Federbein, siehe dazu insbesondere die Darstellung in der Fig. 2 sowie auch die der Fig. 3 der Zeichnung. Das Federelement 11 ist dabei in bekannter Weise mit einem unteren Arm 23 mit der Fahrzeugkarosserie verbunden, siehe die Fig. 2 der Zeichnung. Die erfindungsgemäße Aufhängungsvorrichtung 10 umfaßt weiterhin, siehe dazu insb. die Darstellung der Fig. 1 der Zeichnung, ein mit den seitlichen Steuerarmen verbundenes Schenkelelement 12 mit einer Aufnahme 13 zur rotierbaren Lagerung eines nicht dargestellten Rades, sowie mehrere im wesentlichen seitliche mit 15 bezeichnete Arme, die einerseits über Gelenkverbindungen 16 mit dem Schenkelelement 12 und andererseits mit dem wenigstens einen Federelement 11 verbunden sind, siehe dazu auch wieder die Fig. 2 der Zeichnung. Es wird dabei durch diese seitlichen Arme 15 eine virtuelle Achsschenkel- Achse gebildet, die mit 17 bezeichnet ist, siehe dazu auch die Fig. 3 der Zeichnung. Es wird dazu nachfolgend noch näheres ausgeführt.

Um nun die eingangs erläuterten Nachteile der bekannten Lösungen zu vermeiden, d. h. um insbesondere eine Vereinfachung des Aufbaus der bekannten Lösungen zu erreichen und um gleichzeitig möglichst eine Vermeidung von Störeinflüssen z. B. durch das Auftreten von Störkräften unter Antriebs- oder Bremsbedingungen zu erreichen, ist erfindungsgemäß vorgesehen, daß die Aufhängungsvorrichtüng 10 zwei im wesentlichen seitliche, einerseits über Gelenkverbindungen 16 mit dem Schenkelelement 12 und andererseits mit dem wenigstens einen Federelement 11 verbundene, eine sehr nahe bei der zentralen Radlagerung angeordnete, virtuelle Achsschenkel- Achse 17 bildende Arme aufweist. Dadurch wird erreicht, daß die oben beschriebenen Nachteile der zuvor bekannten Lösungen vermieden werden, wobei insbesondere der Einfluß von Störeinflüssen nahezu minimiert wird. Dies erfolgt durch eine Reduzierung der Hebelarme der Störkräfte dadurch, daß die virtuelle Achsschenkel- Achse 17 sehr nahe bei der zentralen Radlagerung angeordnet ist. Mit einer derartigen Anordnung werden die Hebelarme der durch Antriebs- oder Bremskräfte verursachten Störkräfte nahezu gegen null gesteuert. Dies ist insbesondere möglich für Federbeinaufhängungsvorrichtungen. Die erfindungsgemäße Anordnung weist außerdem durch die Ausbildung mit nur zwei im wesentlichen seitlichen Steuerarmen 15 einen gegenüber z. B. den vierteiligen Lösungen stark vereinfachten Aufbau auf. Die erfindungsgemäße Anordnung ist deshalb auch einfach und kostengünstig herstellbar, und weist eine hohe Zuverlässigkeit und Lebensdauer auf.

Bei der in den Fig. 1 bis 4 der Zeichnung dargestellten Ausführungsform der erfindungsgemäßen Aufhängungsvorrichtung 10 ist dabei vorgesehen, siehe insbesondere die Fig. 3 der Zeichnung, daß die Mittelachsenverlängerungen 18 der beiden im wesentlichen seitlichen Arme 15 der Aufhängungsvorrichtung 10 in einer sehr nahe bei der zentralen Radlagerung angeordneten, die virtuelle Achsschenkel-Achse 17 bildenden Achse zusammenlaufend ausgebildet sind. Diese Ausbildung ist in konstruktiver Hinsicht vorteilhaft.

Es ist weiterhin vorgesehen, siehe insbesondere die Fig. 2, daß die beiden im wesentlichen seitlichen Arme 15 der Aufhängungsvorrichtung 10 an dem unteren, außerhalb der die Federwirkung erzielenden Mittel wie z. B. einer Spiralfeder 19 befindlichen Bereich 20 des Federelementes 11 befestigt sind. Dort lassen sich die beiden im wesentlichen seitlichen Arme 15 der Aufhängungsvorrichtung 10 in einfacher Weise befestigen.

Die beiden im wesentlichen seitlichen Arme 15 der Aufhängungsvorrichtung 10 weisen bei der dargestellten Ausführungsform der erfindungsgemäßen Aufhängungsvorrichtung 10 eine im wesentlichen H-förmige Ausgestaltung auf, siehe dazu neben der Fig. 1 insb. auch die Fig. 4 der Zeichnung. Es wird dadurch ein konstruktiv einfacher und funktionsgerechter Aufbau erzielt.

Das Schenkelelement 12 mit der Aufnahme 13 zur rotierbaren Lagerung eines Rades umfaßt, siehe dazu die Fig. 3 oder die Fig.1 der Zeichnung, einen länglich ausgebildeten Endbereich 21 mit einem Anschlußelement 22 für eine Verbindung zur Lenkung des Fahrzeuges. Das Schenkelelement 12 mit der Aufnahme 13 zur rotierbaren Lagerung des Rades ist dabei drehbar um die virtuelle Achsschenkel-Achse 17 gelagert, wobei eine Betätigung über das Anschlußelement 22 an dem länglich ausgebildeten Endbereich 21 des Schenkelelementes 12 für die Verbindung zur Lenkung des Fahrzeuges erfolgt.

In bevorzugter Ausgestaltung der erfindungsgemäßen Aufhängungsvorrichtung 10 ist vorgesehen, daß die Aufhängungsvorrichtung 10 für das Fahrzeug, insbesondere Kraftfahrzeug, als Federbeinaufhängungsvorrichtung ausgebildet ist. Für diese Art von Aufhängungsvorrichtung ist die erfindungsgemäße Anordnung besonders vorteilhaft einsetzbar.

Die in den Fig. der Zeichnung dargestellte Ausführungsform der erfindungsgemäßen Aufhängungsvorrichtung 10 ist vorliegend als Aufhängungsvorrichtung für einen Vorderradantrieb ausgebildet, kann aber auch an einer angetriebenen Hinterachse eingesetzt werden.

Mit der erfindungsgemäßen Aufhängungsvorrichtung 10 wird insbesondere der Einfluß von Störeinflüssen nahezu minimiert. Dies erfolgt wie erwähnt durch eine Reduzierung der Hebelarme der Störkräfte dadurch, daß die virtuelle Achsschenkel-Achse 17 sehr nahe bei der zentralen Radlagerung angeordnet ist. Mit einer derartigen Anordnung werden die Hebelarme der durch Antriebs- oder Bremskräfte verursachten Störkräfte auf nahezu null reduziert. Dies ist insbesondere möglich für Federbeinaufhängungsvorrichtungen.

Die erfindungsgemäße Anordnung weist außerdem durch die Ausbildung mit nur zwei im wesentlichen seitlichen Steuerarmen 15 einen gegenüber z. B. den vierteiligen Lösungen stark vereinfachten Aufbau auf, sie ist deshalb gegenüber diesen Anordnungen auch einfacher und kostengünstiger herstellbar und vermeidet durch die intern steife Struktur ein Verwinden der Radaufhängung.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So können insbesondere das Schenkelelement 12 sowie die beiden im wesentlichen seitlichen Arme 15 eine von den dargestellten Ausführungsformen abweichende Ausbildung bzw. Anordnung aufweisen. Weiterhin denkbar ist außerdem die Verwendung von andersartigen als den dargestellten Federelementen.

### BEZUGSZEICHENLISTE

- 10: Aufhängungsvorrichtung
- 11: Federelement
- 12: Schenkelelement
- 13: Aufnahme (von 12)
- 14: ---
- 15: seitlicher Arm (von 10)
- 16: Gelenkverbindung (zwischen 12 und 15)
- 17: virtuelle Achsschenkel- Achse
- 18: Mittelachsenverlängerung (von 15)
- 19: Spiralfeder (von 11)
- 20: unterer Bereich (von 11)
- 21: länglicher Endbereich (von 12)
- 22: Anschlußelement für Lenkung (an 21)
- 23: unterer Arm (an11)

## Patentansprüche

1. Aufhängungsvorrichtung (10) für ein Fahrzeug, insbesondere für ein Kraftfahrzeug, mit wenigstens einem Federelement (11), wie z. B. Federbein, mit einem mit der Fahrzeugkarosserie verbundenen Schenkelelement (12) mit einer Aufnahme (13) zur rotierbaren Lagerung eines Rades, mit mehreren im wesentlichen seitlichen Armen (15), die einerseits über Gelenkverbindungen (16) mit dem Schenkelelement (12) und andererseits mit dem wenigstens einen Federelement (11) verbunden sind, wobei durch diese seitlichen Arme (15) eine virtuelle Achsschenkel- Achse (17) gebildet wird,
**dadurch gekennzeichnet, daß**
die Aufhängungsvorrichtung (10) nur zwei im wesentlichen seitliche, einerseits über Gelenkverbindungen (16) mit dem Schenkelelement (12) und andererseits mit dem wenigstens einen Federelement (11) verbundene, eine sehr nahe bei der zentralen Radlagerung angeordnete, eine virtuelle Achsschenkel- Achse (17) bildende, im wesentlichen vertikal stehende Arme (15) aufweist, so dass Mittelachsenverlängerungen (18) der beiden im wesentlichen seitlichen Arme (15) zusammenlaufend ausgebildet sind, so dass Hebelarme von durch Antriebs- oder Bremskräfte verursachten Störkräfte auf nahezu null reduziert sind, wobei das Schenkelelement (12) mit der Aufnahme (13) zur rotierbaren Lagerung des Rades einen länglichen ausgebildeten Endbereich (21) mit einem Anschlußelement (22) für eine Verbindung zur Lenkung des Fahrzeugs umfaßt, und wobei die beiden im wesentlichen seitlichen Arme (15) an einem unteren, außerhalb der Federwirkung befindlichen Bereich (20) des Federelementes (11) befestigt sind, und wobei das Schenkelelement (12) mit der Aufnahme (13) um die virtuelle Achsschenkel-Achse (17) drehbar gelagert ist, und wobei die Aufhängungsvorrichtung (10) als Federbeinaufhängungsvorrichtung ausgebildet ist.

2. Aufhängungsvorrichtung nach Anspruch 1,
**dadurch gekennzeichnet, daß**
die beiden im Wesentlichen seitlichen Arme (15) der Aufhängungsvorrichtung (10) an dem unteren, außerhalb der die Federwirkung erzielenden Mittel wie z. B. einer Spiralfeder (19) befindlichen Bereich (20) des Federelementes (11) befestigt sind.

3. Aufhängungsvorrichtung nach einem der Ansprüche 1 oder 2,
**dadurch gekennzeichnet, daß**
die beiden im Wesentlichen seitlichen Arme (15) der Aufhängungsvorrichtung (10) eine im wesentlichen H- oder X-förmige Ausgestaltung aufweisen.

4. Aufhängungsvorrichtung nach Anspruch 1,
**dadurch gekennzeichnet, daß**
das Schenkelelement (12) mit der Aufnahme (13) zur rotierbaren Lagerung des Rades um die virtuelle Achsschenkel- Achse (17) drehbar gelagert ist, wobei eine Betätigung über das Anschlußelement (22) an dem länglich ausgebildeten Endbereich (21) des Schenkelelementes (12) für die Verbindung zur Lenkung des Fahrzeuges erfolgt.

5. Aufhängungsvorrichtung nach einem der Ansprüche 1 bis 4,
**dadurch gekennzeichnet, daß**
die Aufhängungsvorrichtung (10) für das Fahrzeug, insbesondere Kraftfahrzeug, als Aufhängungsvorrichtung für einen Vorderradantrieb oder Hinterradantrieb ausgebildet ist.

6. Aufhängungsvorrichtung nach einem der Ansprüche 1 bis 5,
**dadurch gekennzeichnet, daß**
die Aufhängungsvorrichtung (10) für das Fahrzeug, insbesondere Kraftfahrzeug, die selben Befestigungspunkte an der Karosserie aufweist, wie eine konventionelle Radaufhängung.

## Claims

1. Suspension apparatus (10) for a vehicle, in particular for a motor vehicle, comprising at least one spring element (11), such as, for example, a spring strut, comprising a branch element (12) connected to the vehicle body and having a receiving fixture (13) for the rotatable mounting of a wheel, comprising a plurality of substantially lateral arms (15), which are connected, on the one hand, via hinge joints (16) to the branch element (12) and, on the other hand, to the at least one spring element (11), a virtual kingpin axis (17) being formed by these lateral arms (15), **characterized in that** the suspension apparatus (10) has only two substantially lateral, substantially vertically upright arms (15), which are connected, on the one hand, via hinge joints (16) to the branch element (12) and, on the other hand, to the at least one spring element (11), whereof one arm is disposed very close to the central wheel mounting and one arm forms a virtual kingpin axis (17), so that centre axis extensions (18) of the two substantially lateral arms (15) are configured in converging arrangement, so that lever arms of disturbance forces created by drive or braking forces are reduced to almost zero, wherein the branch element (12) having the receiving fixture (13) for the rotatable mounting of the wheel comprises an elongated end region (21) having a connection element (22) for connection to the steering gear of the vehicle, and wherein the two substantially lateral arms (15) are fastened to a lower region (20) of the spring element (11), located outside the spring action, and wherein the branch element (12) having the receiving fixture (13) is mounted rotatably about the virtual kingpin axis (17), and wherein the suspension apparatus (10) is configured as a spring strut suspension apparatus.

2. Suspension apparatus according to Claim 1, **characterized in that** the two substantially lateral arms (15) of the suspension apparatus (10) are fastened to the lower region (20) of the spring element (11) located outside the spring-action-procuring means, such as, for example, a helical spring (19).

3. Suspension apparatus according to one of Claims 1 or 2, **characterized in that** the two substantially lateral arms (15) of the suspension apparatus (10) have a substantially H-shaped or X-shaped design.

4. Suspension apparatus according to Claim 1, **characterized in that** the branch element (12) having the receiving fixture (13) for the rotatable mounting of the wheel is mounted rotatably about the virtual kingpin axis (17), an actuation being effected via the connection element (22) to the elongated end region (21) of the branch element (12) for connection to the steering gear of the vehicle.

5. Suspension apparatus according to one of Claims 1 to 4, **characterized in that** the suspension apparatus (10) for the vehicle, in particular a motor vehicle, is configured as a suspension apparatus for a front wheel drive or rear wheel drive.

6. Suspension apparatus according to one of Claims 1 to 5, **characterized in that** the suspension apparatus (10) for the vehicle, in particular a motor vehicle, has the same fastening points to the body as a conventional wheel suspension.

## Revendications

1. Dispositif de suspension (10) pour un véhicule, notamment pour un véhicule automobile, comprenant au moins un élément de ressort (11), comme par exemple une jambe de force, avec un élément de fusée (12) connecté à la carrosserie du véhicule, comprenant un logement (13) pour le support en rotation d'une roue, avec plusieurs bras essentiellement latéraux (15) qui sont connectés d'une part par le biais de connexions articulées (16) à l'élément de fusée (12) et d'autre part à l'au moins un élément de ressort (11), ces bras latéraux (15) formant un axe virtuel de fusée d'essieu (17),
**caractérisé en ce que**
le dispositif de suspension (10) ne présente que deux bras essentiellement latéraux, disposés de manière essentiellement verticale (15), connectés d'une part par le biais de connexions articulées (16) à l'élément de fusée (12) et d'autre part à l'au moins un élément de ressort (11), formant un axe virtuel de fusée d'essieu (17) disposé très près du support de roue central, de sorte que des prolongements de l'axe médian (18) des deux bras essentiellement latéraux (15) convergent l'un vers l'autre, de sorte que des bras de levier de forces perturbatrices provoquées par des forces d'entraînement ou des forces de freinage soient réduits pratiquement à zéro, l'élément de fusée (12) comprenant, avec le logement (13) pour le support rotatif de la roue, une région d'extrémité (21) de forme allongée avec un élément de raccordement (22) pour une connexion à la direction du véhicule, et les deux bras essentiellement latéraux (15) étant fixés à une région inférieure (20) de l'élément de ressort (11) disposée en dehors de l'effet de ressort, l'élément de fusée (12) avec le logement (13) étant monté à rotation autour de l'axe virtuel de fusée d'essieu (17), et le dispositif de suspension (10) étant réalisé sous forme de dispositif de suspension à jambe de force.

2. Dispositif de suspension selon la revendication 1,
**caractérisé en ce que**
les deux bras essentiellement latéraux (15) du dispositif de suspension (10) sont fixés à la région inférieure (20) de l'élément de ressort (11) située en dehors des moyens produisant l'effet de ressort, comme par exemple un ressort spiral (19).

3. Dispositif de suspension selon l'une quelconque des revendications 1 ou 2,
**caractérisé en ce que**
les deux bras essentiellement latéraux (15) du dispositif de suspension (10) présentent une configuration essentiellement en forme de H ou de X.

4. Dispositif de suspension selon la revendication 1,
**caractérisé en ce que**
l'élément de fusée (12) avec le logement (13) est monté à rotation en vue du support rotatif de la roue autour de l'axe virtuel de fusée d'essieu (17), un actionnement par le biais de l'élément de raccordement (22) s'effectuant au niveau de la région d'extrémité (21) de forme allongée de l'élément de fusée (12) pour la connexion à la direction du véhicule.

5. Dispositif de suspension selon l'une quelconque des revendications 1 à 4,
**caractérisé en ce que**
le dispositif de suspension (10) pour le véhicule, notamment un véhicule automobile, est réalisé en tant que dispositif de suspension pour une traction avant ou pour une traction arrière.

6. Dispositif de suspension selon l'une quelconque des revendications 1 à 5,
**caractérisé en ce que**
le dispositif de suspension (10) pour le véhicule, notamment le véhicule automobile, présente les mêmes points de fixation à la carrosserie qu'une suspension de roue conventionnelle.
